# EUROPÄISCHE PATENTSCHRIFT

(11) **EP 1 743 815 B1**
(45) Veröffentlichungstag und Bekanntmachung des Hinweises auf die Patenterteilung: **23.04.2008**
(21) Anmeldenummer: 06013058.0
(22) Anmeldetag: 24.06.2006
(51) Int. Cl.: B60R 25/10

(54) **Diebstahlwarnanlage für ein Kraftfahrzeug**
Antitheft alarm system for a vehicle
Dispositif d'alarme antivol pour véhicule automobile

(30) Priorität: 13.07.2005 DE 102005032637
(43) Veröffentlichungstag der Anmeldung: 17.01.2007
(73) Patentinhaber: Dr.Ing. h.c. F. Porsche Aktiengesellschaft, 70435 Stuttgart (DE)
(72) Erfinder: Brinkmann, Dirk, 75446 Wiernsheim (DE); Sessner, Michael, 71686 Remseck (DE); Kurz, Erich, 75446 Wiernsheim (DE); Leonhardt, Klaus, 75196 Remchingen (DE); Ziegerer, Michael, 75365 Calw-Wimberg (DE)

(56) Entgegenhaltungen:
- DE-A1- 19 955 543
- DE-A1- 19 959 615

## Beschreibung

Die Erfindung geht aus von einer Diebstahlwarnanlage für ein Kraftfahrzeug, wie sie bereits aus der DE 199 55 543 A1 bekannt ist. Um dem zunehmenden Diebstahl von Bauteilen aus einem geparkten Kraftfahrzeug wie z.B. den Diebstahl eines Autoradio, eines Steuergerätes oder eines Scheinwerfers zu begegnen, ist es bekannt, den Ausbau eines Bauteils aus dem Kraftfahrzeug durch Sensoren zu ermitteln und gegebenenfalls bei der Erkennung einer Unregelmäßigkeit einen Alarm auszulösen. Das Alarmsignal wird bei der bekannten Ausführung aus dem Ausfall eines ohnehin ständig oder regelmäßig in das Bauteil fließenden Stroms abgeleitet.

Mit dem erfindungsgemäßen Verfahren soll der Aufwand für die Überwachung und Erkennung des Ausbaus eines Bauteiles weiter verbessert, jedoch der Aufwand reduziert werden.

Das erfindungsgemäße Verfahren hat gegenüber dem bekannten Stand der Technik den Vorteil, dass eine Art zweistufige Überwachung durchgeführt wird, wobei ein regelmäßig fließender Messstrom nur eine äußerst geringe Größe aufweist und bei Abweichung eines so niedrigen Messstroms erst die tatsächliche Überprüfung mit einem wesentlich höheren kurzzeitig und speziellen nur für diesen Zweck der Überprüfung eingespeisten Strom durchgeführt wird.

Vorteilhafter Weise erfolgt die Auslösung einer Fehlermeldung erst dann, wenn auch bei diesem zusätzlich und nur speziell für diesen Zweck eingespeisten hohen Strom ein Fehler festgestellt wird. Damit kommt es nicht fälschlicherweise zu einer Fehlermeldung, wenn bei dem niedrigen Strom eine Unregelmäßigkeit beispielsweise durch Korrosion an den Kontakten auftritt.

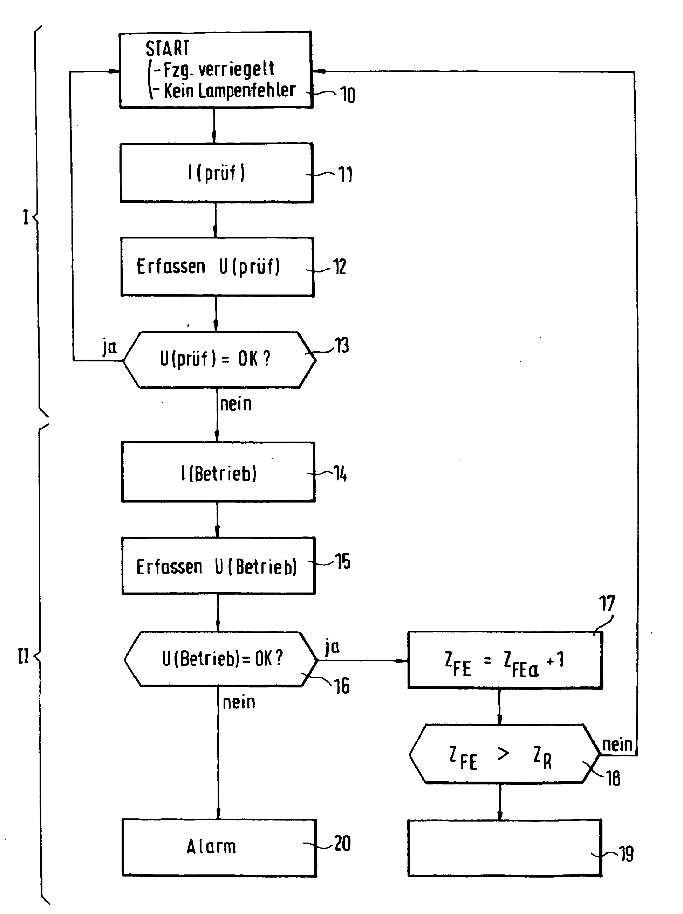

Das erfindungsgemäße Verfahren ist in der Figur dargestellt und im Folgenden näher erläutert.

Die einzige Figur zeigt das Verfahren zur Durchführung einer Scheinwerferüberwachung vor Diebstahl.

Das erfindungsgemäße Verfahren wird mit dem Verfahrensschritt 10 gestartet, angegeben. Hierbei wird überprüft, ob das Fahrzeug verriegelt wurde und ob kein Lampenfehler in der auf Diebstahl zu überwachenden Scheinwerfereinheit vorliegt. Sind diese Bedingungen erfüllt, erfolgt in einem Schritt 11 das periodische kurzzeitige Einschalten eines Prüfstromes |(prüf). Dieser Prüfstrom |(prüf) ist vorteilhafterweise sehr klein z.B. 100 µA, so dass das Bauteil nicht unnötig belastet wird und wird beispielsweise alle 700 msec für 10 msec an die Scheinwerfereinheit geschaltet.
Im Arbeitsschritt 12 wird der aufgrund des geschalteten Stromes anliegende Prüfspannungspegel U(prüf) erfasst und im anschließenden Arbeitsschritt 13 dahingehend überwacht, ob der Prüfspannungspegel periodisch kurzzeitige Dauer ohne Unterbrechung angelegen hat. Wurde keine Unregelmäßigkeit festgestellt, so wird diese Abfrage 13 mit JA beantwortet und der Ja-Ausgang führt zurück zum Arbeitsschritt 10, in welchem die Überwachung neu gestartet wird.
Der eben beschriebene Abschnitt des erfindungsgemäßen Verfahrens stellte damit eine erste Stufe I der Überwachung dar und in der Figur ist das durch Kennzeichnung dieser ersten Stufe mit dem Bezugszeichen I dargestellt, welche die Schritte 10 bis 13 umfasst.

Wurde im Arbeitsschritt 13 eine Fehler in der überwachten Prüfspannung U(prüf) festgestellt, so führt der Nein-Ausgang dieser Abfrage U(prüf) = OK? an den Arbeitschritt 14. Hier beginnt die zweite Stufe des erfindungsgemäßen Verfahrens zu Überwachung auf Diebstahl der Scheinwerfereinheit. Für eine endgültige und abschließende Überprüfung wird im Arbeitsschritt 14 die Lampe voll durchgeschaltet, d.h. es wird der Betriebsstrom |(Betrieb) eingeschaltet und anschließend im Arbeitsschritt 15 die an der Scheinwerfereinheit anliegende Betriebspannung U(Betrieb) erfasst und einer Abfrage 16 zugeführt, die den Spannungspegel dahingehend überwacht, ob er ordnungsgemäß und plausibel ist.

Wenn die Abfrage 16 (U(Betreib) = OK?) mit JA beantwortet, also keine kein Spannungseinbruch festgestellt, so führt der JA-Ausgang an einen Schritt 17, wobei hier die durchgeführten Überprüfung der Stufe II des erfindungsgemäßen Verfahrens gezählt werden. Hierbei wird beispielsweise ein Zähler Z_{FE} (Fehlerzähler) jeweils, wenn vom JA-Ausgang der Abfrage 16 ein Signal geliefert wird, um den Wert 1 erhöht, Z_{FE} = Z_{FEa} + 1. Der so erhöhte Zählerwert Z_{FE} wird im nachfolgenden Schritt 18 mit einem Referenzwert Z_{R} verglichen.
Das Zählen der durchgeführten zweiten Stufe II der Überwachung, die zu keinem Alarm geführt haben, lässt Rückschlüsse darüber zu, ob die periodische kurzzeitige Überwachung mit einem kleinen Prüfstrom |(prüf) in Stufe | gegebenenfalls nicht korrekt arbeitet, da es offensichtlich trotz korrekt eingebauter Scheinwerfereinheit immer wieder zur Fehlererfassung beim Prüfstrom l(prüf) kommt. Wurde der Referenzwert Z_{R} überschritten, so wird im Arbeitsschritt 19 eine Information auszugeben, dass der Messwertblock nicht korrekt arbeitet und die Scheinwerferüberwachung abgebrochen werden muss. Die Funktion kann dann beispielsweise bis zum nächsten Verriegeln des Fahrzeuges abgeschaltet bleiben. Vorteilhafterweise kann auch hier ein Fehlereintrag in einem Speicher des Steuergerätes erfolgen, der bei einem Werkstattbesuch ausgelesen werden kann und so ein Hinweis auf mögliche Fehlerquellen bei der Kontaktierung der Scheinwerfereinheit gibt.
Hat der Zähler für die Fehlermessungen Z_{FE} den Referenzwert für die Zählermessung Z_{R} jedoch nicht überschritten, so springt das Verfahren mit dem Nein-Ausgang der Abfrage 18 an den Anfang des Verfahrens zum Arbeitsschritt 10.

Parallel dazu führt die Nein-Ausgang der Überwachung der Betriebspannung U(Betrieb) in der Abfrage 16 zu einer eindeutigen Fehlererkennung und damit den Hinweis, dass die Scheinwerfereinheit nicht korrekt eingebaut ist, so dass in nachfolgenden Arbeitsschritt 20 ein Alarm ausgelöst, welcher optisch und/oder akustisch erfolgen kann.

Das erfindungsgemäße Verfahren ist ein zweistufiges Verfahren, wie es in der Figur durch die Stufen I und II verdeutlicht ist. Das Verfahren kann außerdem für einen rechten und einen linken Scheinwerfer separat und einzeln durchgeführt werden.

Dieses zweistufige Verfahren bietet den Vorteil, dass die Lampeneinheit nur im Bedarfsfall mit einem Strom in Höhe der Betriebsgröße beaufschlagt werden muss und die Prüfzeit bis zu einer sicheren Erkennung möglichst kurz gehalten werden kann. Damit wird eine unnötige thermische Belastung der Lampe vermieden.

## Patentansprüche

1. Diebstahlwarnanlage für ein Kraftfahrzeug, bei der bei Entwendung eines Bauteils, vorzugsweise einer Scheinwerfereinheit, aus dem Kraftfahrzeug automatisch ein Alarmsignal ausgelöst wird, **dadurch gekennzeichnet, dass** die Diebstahlanlage ein Verfahren in zwei Stufen durchführt, um eine Entwendung eines Bauteils zu detektieren, wobei in einer ersten Stufe periodisch kurzzeitig ein niedriger Prüfstrom an das Bauteil angelegt wird und der Spannungspegel am Bauteil überwacht wird, wobei bei Erkennung einer Unterbrechung des Spannungspegels in der zweiten Stufe das Bauteil mit einem Strom in Betriebgröße belastet wird und die Spannung überwacht und bei einem fehlerhaftem Signal eine Alarm ausgelöst wird.

2. Diebstahlwarnanlage nach Anspruch 1, **dadurch gekennzeichnet, dass** wenn in der ersten Stufe keine Unterbrechung des periodisch eingeschalteten niedrigen Prüfstroms erkannt wird, das Verfahren neu gestartet wird.

3. Diebstahlwarnanlage nach Anspruch 1 und 2, **dadurch gekennzeichnet, dass** im zweiten Teil des Verfahrens die Beaufschlagung des Bauteils mit Betriebsstrom gezählt wird und die Zahl für die durchgeführten Überprüfungen in einem Zähler (Z_{FE}) abgelegt werden.

4. Diebstahlwarnanlage nach Anspruch 3, **dadurch gekennzeichnet, dass** der Zähler (Z_{FE}) mit einem vorgebbaren Referenzwert (Z_{R}) verglichen wird und bei Überschreitung des Referenzwertes die Funktion zur Überwachung der Diebstahlwarnanlage inaktiv geschaltet wird.

5. Diebstahlwarnanlage nach einem der vorherigen Ansprüche, **dadurch gekennzeichnet, dass** die Alarmanlage optisch und/oder akustisch über das Erkennen einer fehlenden Bauteileeinheit informiert.

## Claims

1. Antitheft alarm system for a motor vehicle, in which, when a component, preferably a headlight unit, is stolen from the motor vehicle, an alarm signal is automatically triggered, **characterized in that** the antitheft system carries out a method in two stages in order to detect a theft of a component, wherein, in a first stage, a low test current is periodically briefly applied to the component and the voltage level at the component is monitored, wherein, when an interruption in the voltage level is detected in the second stage, the component is loaded with a current of an operational magnitude and the voltage is monitored, and an alarm is triggered if a signal is faulty.

2. Antitheft alarm system according to Claim 1, **characterized in that** if an interruption is not detected in the periodically switched-on, low test current in the first stage, the method is re-started.

3. Antitheft alarm system according to Claims 1 and 2, **characterized in that**, in the second part of the method, the application of operating current to the component is counted and the number of tests to be carried out is stored in a counter (Z_{FE}).

4. Antitheft alarm system according to Claim 3, **characterized in that** the counter (Z_{FE}) is compared with a predefinable reference value (Z_{R}), and when the reference value is exceeded the function for monitoring the antitheft warning system is deactivated.

5. Antitheft alarm system according to one of the preceding claims, **characterized in that** the alarm system provides visual and/or acoustic information about the detection of a missing component unit.

## Revendications

1. Installation d'alarme antivol pour un véhicule automobile, avec laquelle un signal d'alarme est déclenché automatiquement en cas de vol d'un composant, de préférence une unité de phase, du véhicule automobile, **caractérisée en ce que** l'installation d'alarme antivol exécute un procédé en deux étapes pour détecter un vol d'un composant, une première étape consistant à appliquer périodiquement un courant de contrôle à basse intensité de courte durée au composant et à contrôler le niveau de tension sur le composant, la deuxième étape consistant, en cas de détection d'une interruption du niveau de tension, à soumettre le composant à un courant à l'intensité de service et à contrôler la tension puis à déclencher une alarme en présence d'un signal erroné.

2. Installation d'alarme antivol selon la revendication 1, **caractérisée en ce que** le procédé est redémarré si aucune interruption du courant de contrôle à basse intensité commuté périodiquement n'est détectée dans la première étape.

3. Installation d'alarme antivol selon la revendication 1 ou 2, **caractérisée en ce que** l'application du courant de service au composant est comptabilisée dans la deuxième partie du procédé et le nombre de contrôles effectués est enregistré dans un compteur (Z_{FE}) .

4. Installation d'alarme antivol selon la revendication 3, **caractérisée en ce que** le compteur (Z_{FE}) est comparé avec une valeur de référence (Z_{R}) pouvant être prédéfinie et la fonction de surveillance de l'installation d'alarme antivol est désactivée en cas de dépassement de la valeur de référence.

5. Installation d'alarme antivol selon l'une des revendications précédentes, **caractérisée en ce que** l'installation d'alarme informe de la détection d'une unité de manière visuelle et/ou sonore.
